(19) Europäisches Patentamt
European Patent Office
Office européen des brevets

(11) EP 4 080 420 A1

(12) EUROPEAN PATENT APPLICATION
published in accordance with Art. 153(4) EPC

(43) Date of publication:
26.10.2022 Bulletin 2022/43

(51) International Patent Classification (IPC):
G06N 20/00 (2019.01)

(21) Application number: 20902706.9

(52) Cooperative Patent Classification (CPC):
G06N 20/00

(22) Date of filing: 18.12.2020

(86) International application number:
PCT/JP2020/047396

(87) International publication number:
WO 2021/125318 (24.06.2021 Gazette 2021/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.12.2019 JP 2019230922

(71) Applicant: NTT Communications Corporation
Tokyo 100-8019 (JP)

(72) Inventors:
• KIRITOSHI, Keisuke
Tokyo 100-8019 (JP)
• IZUMITANI, Tomonori
Tokyo 100-8019 (JP)
• ITO, Koji
Tokyo 100-8019 (JP)

(74) Representative: Hoffmann Eitle
Patent- und Rechtsanwälte PartmbB
Arabellastraße 30
81925 München (DE)

(54) **LEARNING DEVICE, LEARNING METHOD, AND LEARNING PROGRAM**

(57) A learning device (10) acquires a plurality of pieces of data, inputs the plurality of pieces of acquired data to a model as input data. When obtaining output data output from the model, the learning device (10) calculates the loss of the model based on the output data and a correct answer data. Then, each time the loss is calculated, the learning device (10) repeats update processing of updating the weight of the model in accordance with the loss. Furthermore, the learning device (10) calculates a value contributing to the interpretability of the model. When the loss and the value contributing to the interpretability of the model satisfy a predetermined condition, the learning device (10) ends the update processing.

FIG.1

EP 4 080 420 A1

## Description

[Technical Field]

The present invention relates to a learning device, a learning method, and a learning program.

[Background Art]

A method of extracting a value contributing to the interpretability of a model has been known. For example, in the case of a neural network, a plurality of methods of extracting the relation between input and output of the neural network, such as a saliency map, has been proposed. These methods are used for indicating a determination basis of a model in various tasks such as image recognition and time-series regression, and are also used in an actual system. A numerical value of the relation between input and output obtained by the method is calculated by an algorithm using back propagation for each input sample for a learned model of a neural net.

Furthermore, also in the case other than the neural network, a contribution level and an importance score are used as an interpretation of a model. The contribution level is obtained by LIME or SHAP that can be used for any model. The importance score indicates the importance of input obtained by a method using a decision tree such as a gradient boosting tree. The value contributing to the interpretability of a model is hereinafter referred to as an attribution.

[Citation List]

[Non Patent Citation]

Non Patent Document 1: Smilkov Daniel, et al. "Smoothgrad: removing noise by adding noise." arXiv preprint 1706.03825 (2017).
Non Patent Document 2: Simonyan Karen, Andrea Vedaldi, and Andrew Zisserman. "Deep inside convolutional networks: Visualising image classification models and saliency maps." arXiv preprint arXiv: 1312.6034 (2014).
Non Patent Document 3: Binder Alexander, et al. "Layer-wise relevance propagation for deep neural network architectures." Information Science and Applications (ICISA) 2016. ringer, Singapore, 2016. 913-922.
Non Patent Document 4: Ribeiro Marco Tulio, Sameer Singh, and Carlos Guestrin. Why should i trust you?: Explaining the predictions of any classifier." Proceedings of the 22nd ACM SIGKDD international conference on knowledge discovery and data mining. ACM, 2016.
Non Patent Document 5: Strumbelj Erik, and Igor Kononenko. "Explaining prediction models and individual predictions with feature contributions." Knowledge and information systems 41.3 (2013):647-665.

[Summary of Invention]

[Technical Problem]

A related learning method, however, may have difficulty in obtaining a value contributing to the interpretability of a model in an easily observable value for a model that specifies a condition of the number of times of learning and performs sequential learning among machine learning models. For example, a value obtained as an attribution depends on the learning progress of a model. An attribution obtained from the model by performing learning at a certain number of times sometimes can indicate the relation between input and output in an interpretable manner (hereinafter, referred to as attribution converging), or sometimes has difficulty in being understood due to noise, which makes stabilization difficult.

This is because acquisition of an attribution without noise is not guaranteed. A criterion for ending learning of a model is often preliminarily determined by the number of times of learning. Alternatively, as represented by early stopping, learning is often terminated based on whether or not accuracy is improved, or, as in hyperparameter search, whether or not the accuracy exceeds a certain value is often used.

[Solution to Problem]

In order to solve the above-described problems and achieve the object, a learning device according to the present invention includes: an acquisition unit configured to acquire a plurality of pieces of data; a first calculation unit configured to input the plurality of pieces of data acquired by the acquisition unit to a model as input data, and when obtaining output data output from the model, calculate a loss of the model based on the output data and a correct answer data; an update unit configured to repeat update processing of updating weight of the model in accordance with a loss each time the first calculation unit calculates the loss; a second calculation unit configured to calculate a value contributing to interpretability of the model; and an update ending unit configured to end the update processing when the loss calculated by the first calculation unit and the value calculated by the second calculation unit satisfy a predetermined condition.

A learning method according to the present invention is a learning method executed by a learning device, and includes: an acquisition process of acquiring a plurality of pieces of data; a first calculation process of inputting the plurality of pieces of data acquired at the acquisition process to a model as input data, and when output data output from the model is obtained, calculating a loss of the model based on the output data and a correct answer data; an update process of repeating update processing of updating weight of the model in accordance with a loss each time the loss is calculated at the first calculation process; a second calculation process of calculating a value contributing to interpretability of the model; and an update ending process of ending the update processing when the loss calculated at the first calculation process and the value calculated at the second calculation process satisfy a predetermined condition.

A learning program according to the present invention causes a computer to execute: an acquisition step of acquiring a plurality of pieces of data; a first calculation step of inputting the plurality of pieces of data acquired at the acquisition step to a model as input data, and when output data output from the model is obtained, calculating a loss of the model based on the output data and a correct answer data; an update step of repeating update processing of updating weight of the model in accordance with a loss each time the loss is calculated at the first calculation step; a second calculation step of calculating a value contributing to interpretability of the model; and an update ending step of ending the update processing when the loss calculated at the first calculation step and the value calculated at the second calculation step satisfy a predetermined condition.

[Advantageous Effects of Invention]

According to the present invention, an effect of obtaining a value contributing to the interpretability of a model in an easily observable value while maintaining the accuracy of the model can be obtained.

[Brief Description of Drawings]

FIG. 1 is a block diagram illustrating a configuration example of a learning device according to a first embodiment.
FIG. 2 outlines learning processing executed by the learning device.
FIG. 3 is a flowchart illustrating one example of the flow of the learning processing in the learning device according to the first embodiment.
FIG. 4 is a block diagram illustrating a configuration example of a learning device according to a second embodiment.
FIG. 5 outlines abnormality predicting processing and attribution extracting processing executed by a learning device.
FIG. 6 outlines image classification processing and the attribution extracting processing executed by the learning device.
FIG. 7 is a flowchart illustrating one example of the flow of the attribution extracting processing in the learning device according to the second embodiment.
FIG. 8 illustrates a computer that executes a program.

[Embodiments for Carrying Out the Invention]

Embodiments of a learning device, a learning method, and a learning program according to the present application will be described in detail below with reference to the drawings. Note that the embodiments do not limit the learning device, the learning method, and the learning program according to the present application.

[First Embodiment]

In the following embodiment, the configuration of a learning device 10 according to a first embodiment and the flow of processing performed by the learning device 10 will be sequentially described, and finally, effects of the first embodiment will be described.

[Configuration of Learning Device]

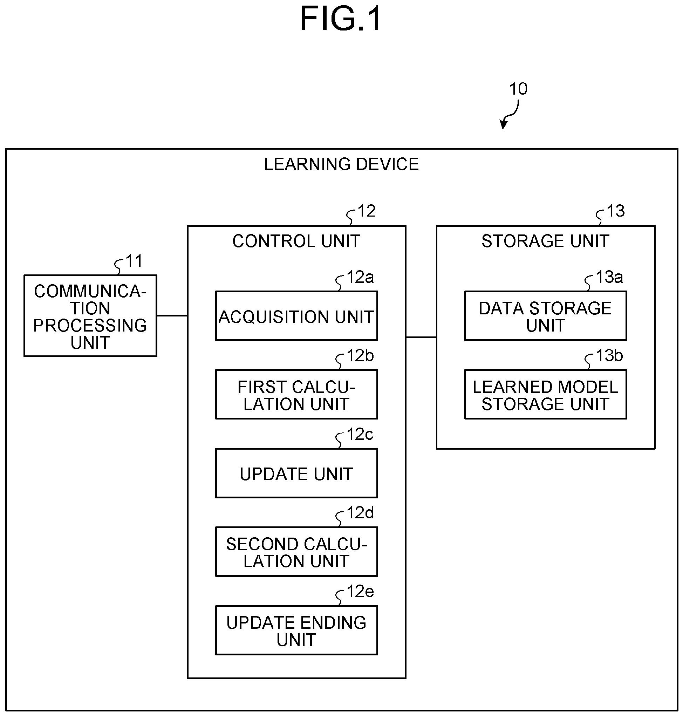

First, the configuration of the learning device 10 will be described with reference to FIG. 1. FIG. 1 is a block diagram illustrating a configuration example of the learning device according to the first embodiment. The learning device 10 performs learning processing of repeating processing of updating weight of a model by using preliminarily prepared learning data. In the learning device 10, in order to ensure reduction in noise of an attribution in the learning processing, not only the accuracy of the model but an attribution value is considered as a learning end condition. For example, the learning device 10 applies a scale (e.g., L1 norm of attribution score and Gini coefficient of attribution score) for measuring the sparsity of the attribution as the learning end condition. When the accuracy is equal to or less than a certain value and the sparsity level is equal to or more than a certain value, the learning device 10 can end the learning.

As illustrated in FIG. 1, the learning device 10 includes a communication processing unit 11, a control unit 12, and a storage unit 13. Processing of each unit of the learning device 10 will be described below.

The communication processing unit 11 controls communication related to various pieces of information exchanged with a device connected thereto. Furthermore, the storage unit 13 stores data and a program necessary for various pieces of processing performed by the control unit 12. The storage unit 13 includes a data storage unit 13a and a learned model storage unit 13b. For example, the storage unit 13 is a storage device such as a semiconductor memory element including a random access memory (RAM), a flash memory, and the like.

The data storage unit 13a stores data acquired by an acquisition unit 12a to be described later. For example, the data storage unit 13a stores a learning data set to which a correct answer label is preliminarily assigned. Note that any data may be stored as long as the data includes a plurality of real values. For example, data (e.g., data of temperature, pressure, sound, vibration, and the like) of a sensor provided in a target device of a factory, a plant, a building, a data center, and the like or data of image data may be stored as a type of the data.

The learned model storage unit 13b stores a learned model learned by learning processing to be described later. For example, the learned model storage unit 13b stores a prediction model of a neural network for predicting an abnormality of facilities to be monitored as the learned model.

The control unit 12 includes an internal memory for storing a program and requested data specifying various processing procedures and the like, and executes various pieces of processing thereby. For example, the control unit 12 includes the acquisition unit 12a, a first calculation unit 12b, an update unit 12c, a second calculation unit 12d, and an update ending unit 12e. Here, the control unit 12 includes, for example, an electronic circuit and an integrated circuit. The electronic circuit includes a central processing unit (CPU), a micro processing unit (MPU), a graphical processing unit (GPU), and the like. The integrated circuit includes an application specific integrated circuit (ASIC), a field programmable gate array (FPGA), and the like.

The acquisition unit 12a acquires a plurality of pieces of data. For example, the acquisition unit 12a reads and acquires the data set stored in the data storage unit 13a. Here, the data acquired by a sensor includes, for example, various pieces of data of temperature, pressure, sound, vibration, and the like of a device and a reaction furnace in a factory and a plant, which are facilities to be monitored. Furthermore, the data acquired by the acquisition unit 12a is not limited to the data acquired by the sensor, and may be, for example, image data, manually input numerical data, and the like. Note that the acquisition unit 12a may acquire data in real time. For example, the acquisition unit 12a may periodically (e.g., every minute) acquire multivariate time-series numerical data from a sensor installed in facilities to be monitored such as a factory and a plant.

The first calculation unit 12b inputs a plurality of pieces of data acquired by the acquisition unit 12a to a model as input data. When obtaining output data output from the model, the first calculation unit 12b calculates loss of the model based on the output data and a correct answer data. For example, the first calculation unit 12b calculates the loss of the model by using a predetermined loss function. Note that a method of calculating a loss is not limited, and any method may be used.

Each time the first calculation unit 12b calculates a loss, the update unit 12c repeats update processing of updating the weight of the model in accordance with the loss. The update unit 12c updates the weight (parameter) in accordance with the magnitude of the loss. Note that an update method is not limited, and any method may be used.

The second calculation unit 12d calculates a value contributing to the interpretability of the model. For example, the second calculation unit 12d calculates an attribution based on the input data and the output data. The attribution is a level of contribution of each element of the input data to the output data.

Here, a specific example of calculating the attribution will be described. For example, the second calculation unit 12d calculates an attribution for each sensor at each time by using a partial differential value of an output value to each input value or an approximate value thereof in a learned model of calculating the output value from the input value. In one example, the second calculation unit 12d calculates an attribution for each sensor at each time by using a saliency map. The saliency map is a technique used in image classification in a neural net, and is a technique of extracting a partial differential value of output of the neural net to each input as an attribution contributing to output. Note that the attribution may be calculated by a method other than the saliency map.

Furthermore, the value contributing to the interpretability of the model calculated by the second calculation unit 12d is not limited to the attribution, and may represent, for example, the sparsity of the weight of the model.

When the loss calculated by the first calculation unit 12b and the value calculated by the second calculation unit 12d satisfy a predetermined condition, the update ending unit 12e ends the update processing. For example, when the loss calculated by the first calculation unit 12b is equal to or less than a preset threshold and the value calculated by the second calculation unit 12d is equal to or less than a preset threshold, the update ending unit 12e may ends the update processing. More specifically, when the loss is equal to or less than a predetermined threshold and the L1 norm of the attribution is equal to or less than a preset threshold, the update ending unit 12e ends the update processing.

Furthermore, when the loss calculated by the first calculation unit 12b is consecutively larger than the loss calculated last time at a predetermined number of times and the value calculated by the second calculation unit 12d is consecutively larger than the value calculated last time at a predetermined number of times, the update ending unit 12e the update ending unit may end the update processing. More specifically, when the loss is consecutively larger than the loss calculated last time five times and the L1 norm of the attribution is consecutively larger than the L1 norm of the attribution calculated last time five times, the update ending unit 12e may end the update processing.

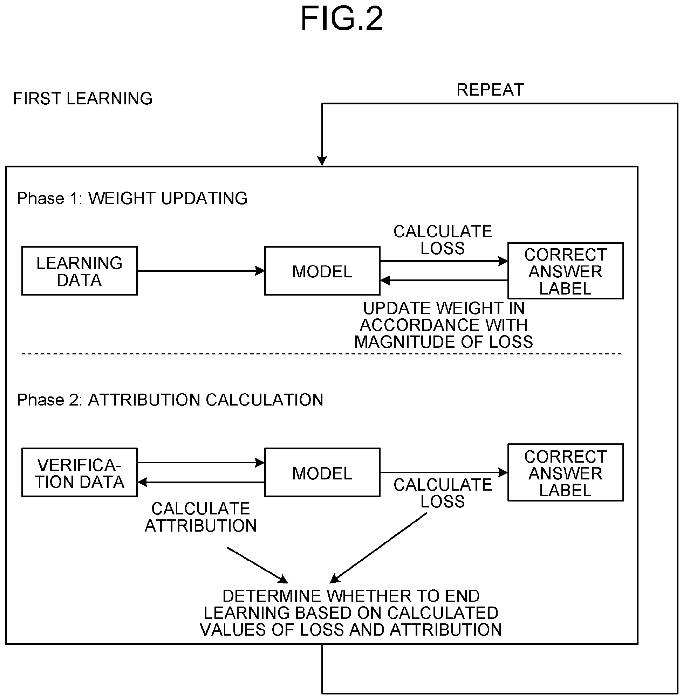

Here, learning processing executed by the learning device 10 will be outlined with reference to FIG. 2. FIG. 2 outlines learning processing executed by the learning device. As illustrated in FIG. 2, the learning device 10 learns a model by repeating Phase 1 and Phase 2. In Phase 1, weight is updated. In Phase 2, an attribution is calculated. Furthermore, the learning device 10 determines whether to end the learning based on a calculated loss and an attribution value.

In Phase 1, the learning device 10 inputs learning data to a model to acquire output data output from the model, calculates a loss based on the output data and a correct answer label, and updates weight in accordance with the magnitude of the loss.

Subsequently, in Phase 2, the learning device 10 inputs verification data to the model to acquire output data output from the model, and calculates the attribution based on the input data and the output data. Furthermore, the learning device 10 calculates a loss based on the output data and the correct answer label. Note that the verification data here may be the same as or different from the learning data input to the model in Phase 1.

Then, the learning device 10 determines whether or not to end the learning based on the calculated loss and the attribution value. For example, when the loss is equal to or less than a predetermined threshold and the L1 norm of the attribution is equal to or less than a preset threshold, the learning device 10 ends the update processing.

When the attribution is used as a value contributing to the interpretability of a model, the learning device 10 calculates the L1 norm of the attribution by Expression (1) below, for example. In the following calculation expression, "$x_{ij}$" represents values of a sample i and a feature j of input data. Furthermore, in the following calculation expression, "A" is a function for calculating an attribution from a feature and a model, and "M" is a model.

$$penalty(\mathbf{x}, M) = \sum_{i=1}^{n} \sum_{j=1}^{m} \left| A\left( x_{ij}, M \right) \right| \tag{1}$$

Furthermore, when the loss is equal to or less than a predetermined threshold and the L1 norm of the weight of the model is equal to or less than a preset threshold, the learning device 10 may end the update processing. For example, when the L1 norm of the weight of the model is used as a value contributing to the interpretability of the model and as a value other than the attribution, the learning device 10 calculates the L1 norm of the weight of the model by Expression (2) below, for example. In the following calculation expression, "$x_{ijk}$" means weight from a node j to a node k of an i-layer of the model.

$$penalty(M) = \sum_{i=1}^{l} \sum_{j=1}^{n} \sum_{k=1}^{m} \left| w_{ijk} \right| \tag{2}$$

As a result, when determining to end the learning, the learning device 10 outputs a learned model and stores the learned model in the learned model storage unit 13b, for example. Furthermore, when determining to end the learning, the learning device 10 returns to Phase 1, and performs processing of updating weight. That is, the learning device 10 learns a model by repeating Phase 1 and Phase 2 until determining to end the learning. In phase 1, weight is updated. In phase 2, an attribution is calculated.

As illustrated above, in the learning device 10, in order to ensure reduction in noise of an attribution in the learning, not only the accuracy of the model but a value of an attribution is introduced as a learning end condition. For example, the learning device 10 applies a scale for measuring the sparsity of the attribution as the learning end condition. When the accuracy is equal to or less than a certain value and the sparsity level is equal to or more than a certain value, the learning device 10 can end the learning.

Furthermore, in the learning device 10, the learning end condition directly includes an attribution value. As a result, attribution convergence that has not been guaranteed in the traditional learning in which only accuracy is used as the end condition can be considered, and the stability of a score of an obtained attribution can be enhanced.

Furthermore, a learning curve has a characteristic of repeating stagnation and descent of a loss depending on data, which causes a problem of gazing at the learning before the loss actually converges in related early stopping only by paying attention to accuracy. In contrast, it is known that there is close relation between learning end and attribution convergence. The learning device 10 can determine not to stop learning when attributions are not converged at the time of the above-described stagnation of the learning curve by adopting the attribution convergence as an end condition.

Note that the model of the present embodiment may be a model other than the neural network. For example, in addition to the neural network, there are several models that sequentially perform learning by using a gradient descent method and the like such as gradient boosting, and the present embodiment can also be used for these models. The learning device 10 uses LIME and SHAP as methods of extracting the relation between input and output for any model in a general-purpose manner. A mechanism of stopping learning at the time when a value is sparse similarly to an (expression of) attribution may be achieved by calculating the value during the learning. Furthermore, a method such as gradient boosting decision tree can calculate the importance score of each feature amount. A mechanism of stopping learning at the time when the score is sparse similarly to a (or an expression of) weight can be achieved by using the score similarly to the weight.

[Processing Procedure of Learning Device]

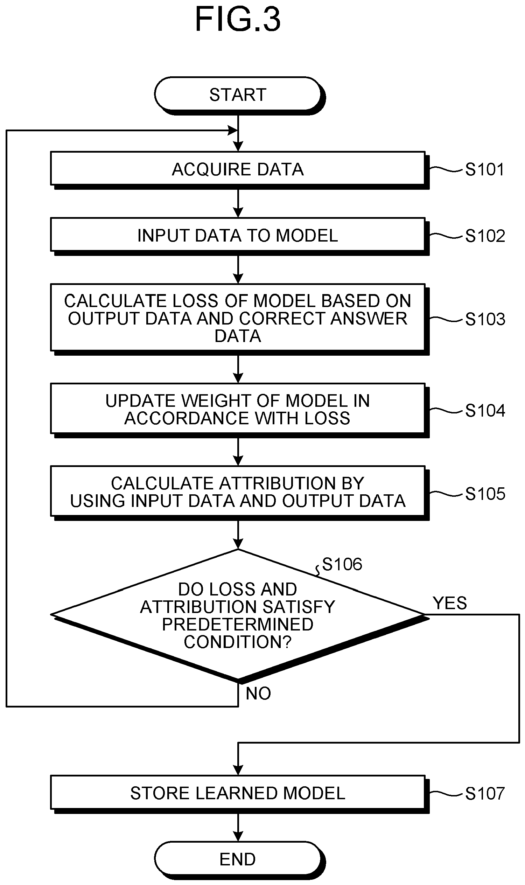

Next, an example of a procedure of processing performed by the learning device 10 according to the first embodiment will be described with reference to FIG. 3. FIG. 3 is a flowchart illustrating one example of the flow of learning processing in the learning device according to the first embodiment. Note that, in the example of FIG. 3, a case where an attribution is used as a value contributing to the interpretability of a model will be described as an example.

As illustrated in FIG. 3, the acquisition unit 12a of the learning device 10 acquires data. For example, the acquisition unit 12a reads and acquires a data set stored in the data storage unit 13a (Step S101). Then, the first calculation unit 12b inputs the data acquired by the acquisition unit 12a to a model (Step S102), and calculates the loss of the model based on output data and correct answer data (Step S103) .

Then, the update unit 12c updates the weight of the model in accordance with the loss loss with the first calculation unit 12b (Step S104). Subsequently, the second calculation unit 12d calculates an attribution by using the input data and the output data (Step S105). For example, when inputting, as input data, a plurality of pieces of sensor data to a prediction model for predicting the state of facilities to be monitored and obtaining output data output from the prediction model, the second calculation unit 12d calculates an attribution for each sensor based on the input data and the output data.

Then, the update ending unit 12e determines whether or not the loss calculated by the first calculation unit 12b and the attribution calculated by the second calculation unit 12d satisfy a predetermined condition (Step S106). For example, the update ending unit 12e the update ending unit 12e determines whether or not the loss is equal to or less than a predetermined threshold and the L1 norm of the attribution is equal to or less than a preset threshold.

As a result, when the update ending unit 12e determines that the loss and the attribution do not satisfy a predetermined condition (No in Step S106), the learning device 10 returns to the processing in Step S101, and repeats the processing of Steps S101 to S106 until the loss and the attribution satisfy the predetermined condition.

Furthermore, when the update ending unit 12e determines that the loss and the attribution satisfy the predetermined condition (Yes in Step S106), the learned model is stored in the learned model storage unit 13b (Step S107) .

[Effects of First Embodiment]

The learning device 10 according to the first embodiment acquires a plurality of pieces of data, inputs the plurality of pieces of acquired data to a model as input data. When obtaining output data output from the model, the learning device 10 calculates the loss of the model based on the output data and a correct answer data. Then, each time the loss is calculated, the learning device 10 repeats update processing of updating the weight of the model in accordance with the loss. Furthermore, the learning device 10 calculates a value contributing to the interpretability of the model. When the loss and the value contributing to the interpretability of the model satisfy a predetermined condition, the learning device 10 ends the update processing. Therefore, the learning device 10 can obtain a value contributing to the interpretability of a model in an easily observable value while maintaining the accuracy of the model.

That is, for example, the learning device 10 according to the first embodiment can reduce noise of an attribution of a learned model not by using a conventionally used learning end condition but by adding an attribution value to a learning end condition. The state in which noise of an attribution is reduced indicates a sparse and smooth state in which an observer can easily perform observation. Furthermore, the learning device 10 according to the first embodiment can adopt an approach that does not stop learning even when the learning stagnates in a method of terminating the learning based on accuracy, such as early stopping, by adding an attribution value to a learning end condition in contrast to the conventionally used learning end condition.

[Second Embodiment]

Although, in the above-described first embodiment, the learning device that learns a model has been described, in a second embodiment, a learning device that extracts an attribution by using a learned model obtained by learning processing will be described. In the following second embodiment, the configuration of a learning device 10A according to the second embodiment and the flow of processing performed by the learning device 10A will be sequentially described, and finally, effects of the first embodiment will be described. Note that description of a configuration and processing similar to those of the first embodiment will be omitted.

[Configuration of Learning Device]

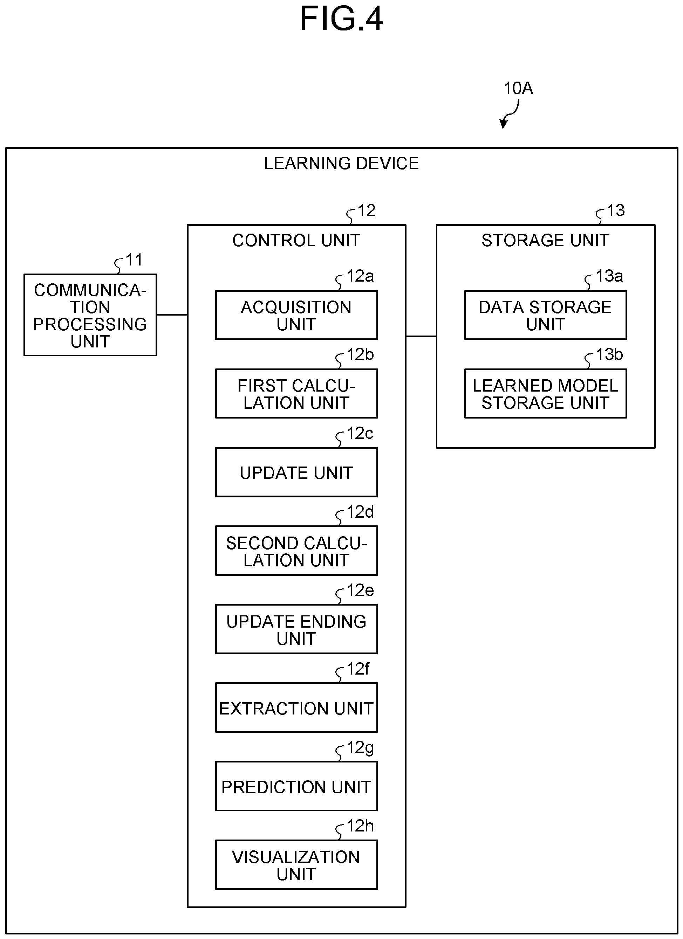

First, the configuration of the learning device 10A will be described with reference to FIG. 4. FIG. 4 is a block diagram illustrating a configuration example of the learning device according to the second embodiment. For example, the learning device 10A collects a plurality of pieces of data acquired by a sensor installed in facilities to be monitored such as a factory and a plant. The learning device 10A outputs an estimated value of a specific sensor of the facilities to be monitored by using a learned model for predicting an abnormality of the facilities to be monitored by using the plurality of pieces of collected data as inputs. Furthermore, the learning device 10A may calculate an abnormality level from the estimated value output in this manner.

For example, when a regression model using a value of a specific sensor as an objective variable is learned, the abnormality level can be defined as, for example, an error between the estimated value of the sensor output by a model and a preliminarily designated specific value. Alternatively, when the presence or absence of abnormality occurrence is treated as a classification problem and a model is learned, the ratio of a time zone classified as an abnormality within a designated time and the like can be used. Furthermore, the learning device 10A calculates an attribution, which is a level of contribution to an output value for each sensor, by using data of each sensor input to the learned model and output data output from the learned model. Here, the attribution indicates how much each input contributes to output. A larger absolute value of the attribution means a larger influence of the input to the output.

The learning device 10A includes the communication processing unit 11, the control unit 12, and the storage unit 13. The control unit 12 includes the acquisition unit 12a, the first calculation unit 12b, the update unit 12c, the second calculation unit 12d, the update ending unit 12e, an extraction unit 12f, a prediction unit 12g, and a visualization unit 12h. Here, the learning device 10A is different from the learning device 10 in further including the extraction unit 12f, the prediction unit 12g, and the visualization unit 12h. Note that the acquisition unit 12a, the first calculation unit 12b, the update unit 12c, the second calculation unit 12d, and the update ending unit 12e perform processing similar to those performed by the acquisition unit 12a, the first calculation unit 12b, the update unit 12c, the second calculation unit 12d, and the update ending unit 12e of the learning device 10 described in the first embodiment, so that the description thereof will be omitted.

The extraction unit 12f inputs input data to a learned model for which the update unit 12c had repeated update processing until the update ending unit 12e ended the update processing. When obtaining output data output from the learned model, the extraction unit 12f extracts a value contributing to the interpretability of the model. For example, the extraction unit 12f reads the learned model from the learned model storage unit 13b, inputs data to be processed to the learned model, and extracts an attribution for each data.

For example, the extraction unit 12f calculates an attribution for each sensor at each time by using a partial differential value of an output value to each input value or an approximate value thereof in a learned model of calculating the output value from the input value. In one example, the extraction unit 12f calculates an attribution for each sensor at each time by using a saliency map.

The prediction unit 12g outputs a predetermined output value by using, for example, a learned model for predicting the state of facilities to be monitored by using a plurality of pieces of data as inputs. For example, the prediction unit 12g calculates the abnormality level of the facilities to be monitored by using process data and the learned model (identification function or regression function), and predicts whether or not an abnormality occurs after a certain preset period of time.

The visualization unit 12h visualizes the attribution extracted by the extraction unit 12f and the abnormality level calculated by the prediction unit 12g. For example, the visualization unit 12h displays a graph indicating transition of the attribution of each sensor data, and displays the calculated abnormality level as a chart screen.

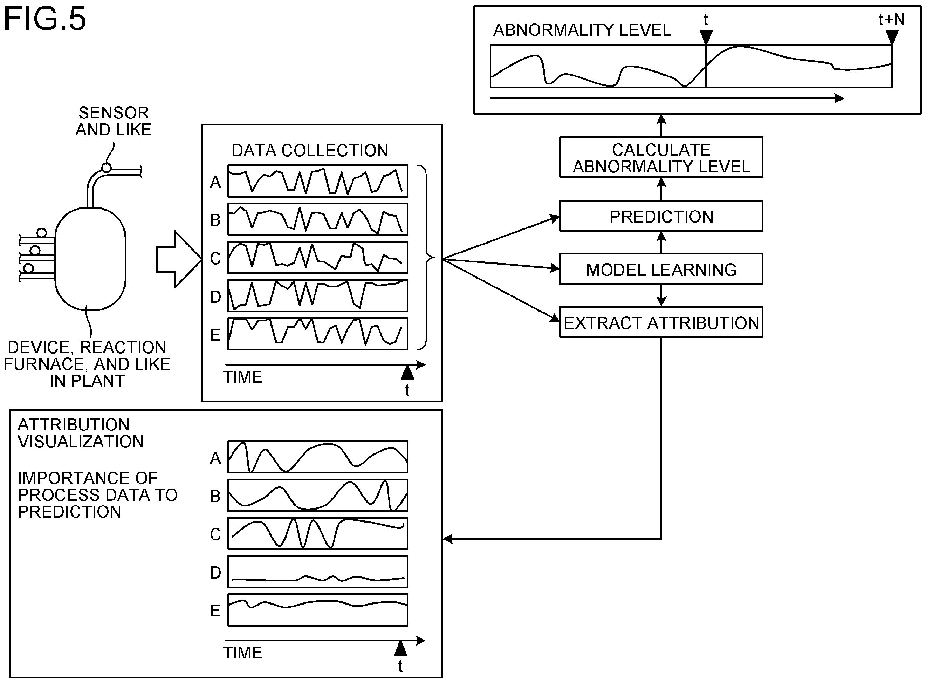

Here, abnormality predicting processing and attribution extracting processing executed by the learning device 10A will be outlined with reference to FIG. 5. FIG. 5 outlines the abnormality predicting processing and the attribution extracting processing executed by the learning device.

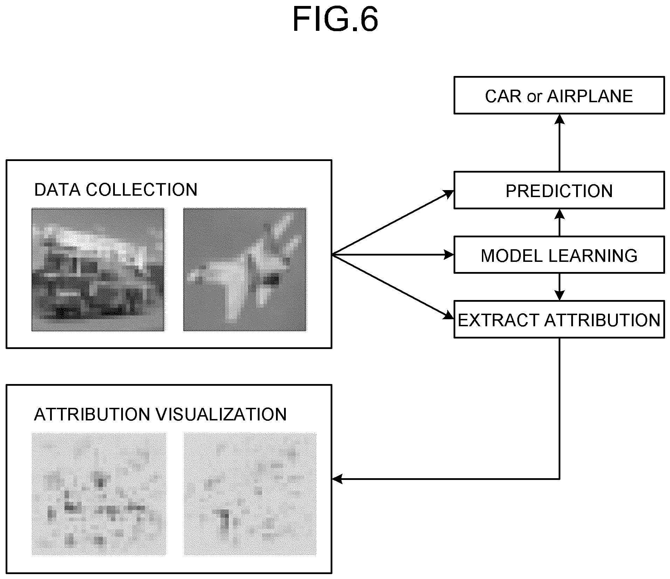

In FIG. 5, a sensor a device for collecting an operation signal are attached in a reaction furnace, a device, and the like in a plant, and data is collected at certain intervals. Then, FIG. 6 illustrates transition of the process data collected from each of sensors A to E. As described in the first embodiment, a learned model is generated by learning a model. Then, the prediction unit 12g predicts an abnormality after a certain period of time by using the learned model. Then, the visualization unit 12h outputs time-series data of the calculated abnormality level as a chart screen.

Furthermore, the extraction unit 12f extracts an attribution to a predetermined output value for each sensor at each time by using the process data input to the learned model and an output value from the learned model. Then, the visualization unit 12h displays a graph indicating the transition of the importance of the process data of each sensor to the prediction.

Furthermore, the learning device 10A may be applied not only to the abnormality predicting processing but to, for example, the image classification processing after collecting image data. Here, image classification processing and attribution extracting processing executed by the learning device 10A will be outlined with reference to FIG. 6. FIG. 6 outlines the image classification processing and the attribution extracting processing executed by the learning device.

In FIG. 6, image data is collected, and the collected image data is used as input data. As illustrated in the first embodiment, a learned model is generated by learning a model. Then, the prediction unit 12g classifies images included in the image data by using the learned model. For example, in the example of FIG. 6, the prediction unit 12g determines whether an image included in the image data is an image of a car or an image of an airplane, and outputs a determination result.

Furthermore, the extraction unit 12f extracts an attribution for each pixel in each image by using the image data input to the learned model and a classification result output from the learned model. Then, the visualization unit 12h displays an image indicating the attribution for each pixel in each image. In this image, an attribution is expressed by shading. A pixel having a larger attribution has a darker predetermined color, and a pixel having a smaller attribution has a lighter predetermined color.

[Processing Procedure of Learning Device]

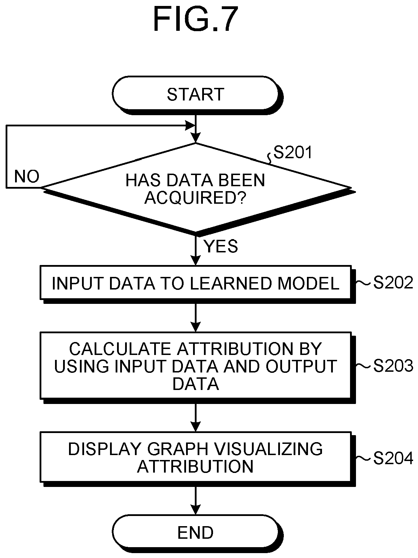

Next, an example of a procedure of processing performed by the learning device 10A according to the second embodiment will be described with reference to FIG. 7. FIG. 7 is a flowchart illustrating one example of the flow of attribution extracting processing in the learning device according to the second embodiment.

As illustrated in FIG. 7, when acquiring data (Yes in Step S201), the extraction unit 12f of the learning device 10 inputs input data to a learned model (Step S202). When obtaining output data output from the learned model, the extraction unit 12f of the learning device 10 calculates an attribution by using the input data and the output data (Step S203).

Then, the visualization unit 12h displays a graph visualizing the attribution (Step S204). For example, the visualization unit 12h displays a graph indicating transition of the attribution of each sensor data.

As described above, when inputting input data to the learned model learned by the learning processing described in the first embodiment and obtaining output data output from the learned model, the learning device 10A according to the second embodiment extracts an attribution of each element of the input data to the output data based on the input data and the output data. Therefore, the learning device 10A can extract the attribution with less noise.

[System Configuration and the Like]

Furthermore, each component of each illustrated device is functionally conceptual, and is not necessarily requested to be physically configured as illustrated in the drawings. That is, a specific form of distribution and integration of each device is not limited to the illustrated form, and all or a part thereof can be functionally or physically distributed and integrated in any unit in accordance with various loads, usage conditions, and the like. Moreover, all or any part of each processing function of each device can be implemented by a CPU or a GPU and a program analyzed and executed by the CPU or the GPU, or can be implemented as hardware using wired logic.

Furthermore, all or a part of the processing described as being automatically performed among pieces of processing described in the present embodiment can be manually performed. Alternatively, all or a part of the processing described as being manually performed can be automatically performed by a known method. In addition, the processing procedure, the control procedure, the specific names, and the information including various pieces of data and parameters illustrated in the specification and the drawings can be changed in any way unless otherwise specified.

[Program]

Furthermore, it is also possible to create a program in which the processing executed by the information processing device described in the above-described embodiment is written in a computer-executable language. For example, it is also possible to create a program in which the processing executed by the learning devices 10 and 10A according to the embodiments is written in a computer-executable language. In this case, effects similar to those in the above-described embodiment can be obtained by a computer executing the program. Moreover, processing similar to that in the above-described embodiment may be executed by recording such a program in a computer-readable recording medium and reading and executing the program recorded in the recording medium in the computer.

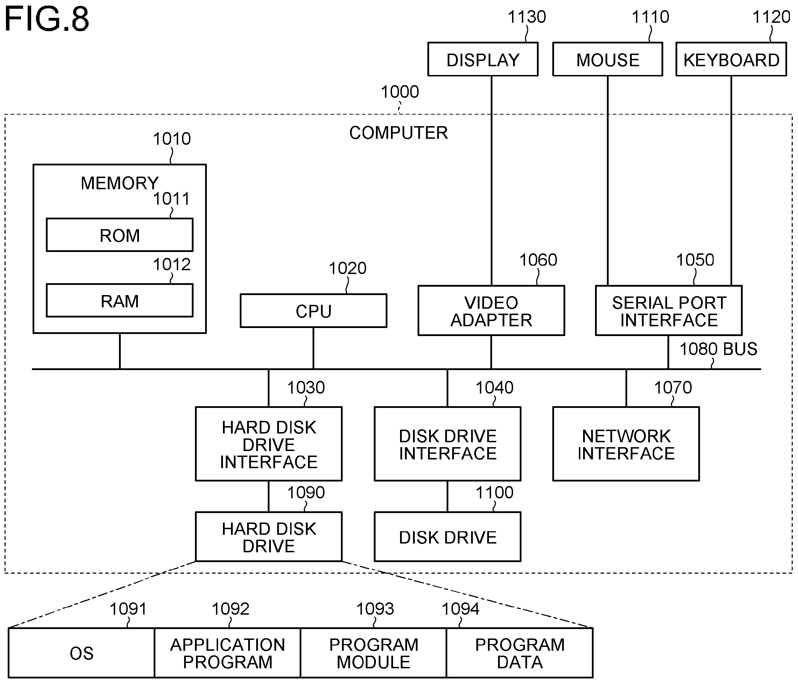

FIG. 8 illustrates a computer that executes a program. As illustrated in FIG. 8, a computer 1000 includes, for example, a memory 1010, a CPU 1020, a hard disk drive interface 1030, a disk drive interface 1040, a serial port interface 1050, a video adapter 1060, and a network interface 1070. These units are connected by a bus 1080.

As illustrated in FIG. 8, the memory 1010 includes a read only memory (ROM) 1011 and a RAM 1012. The ROM 1011 stores, for example, a boot program such as a basic input output system (BIOS). As illustrated in FIG. 8, the hard disk drive interface 1030 is connected to a hard disk drive 1090. As illustrated in FIG. 8, the disk drive interface 1040 is connected to a disk drive 1100. For example, a removable storage medium such as a magnetic disk and an optical disk is inserted into the disk drive 1100. As illustrated in FIG. 8, the serial port interface 1050 is connected to, for example, a mouse 1110 and a keyboard 1120. As illustrated in FIG. 8, the video adapter 1060 is connected to, for example, a display 1130.

Here, as illustrated in FIG. 8, the hard disk drive 1090 stores, for example, an OS 1091, an application program 1092, a program module 1093, and program data 1094. That is, the above-described program is stored in, for example, the hard disk drive 1090 as a program module in which a command to be executed by the computer 1000 is written.

Furthermore, the various pieces of data described in the above-described embodiment are stored in, for example, the memory 1010 or the hard disk drive 1090 as program data. Then, the CPU 1020 reads the program module 1093 and the program data 1094 stored in the memory 1010 and the hard disk drive 1090 to the RAM 1012 as necessary, and executes various processing procedures.

Note that the program module 1093 and the program data 1094 related to the program are not limited to being stored in the hard disk drive 1090, and may be stored in, for example, a detachable storage medium and read by the CPU 1020 via a disk drive or the like. Alternatively, the program module 1093 and the program data 1094 related to the program may be stored in another computer connected via a network (e.g., local area network (LAN) and wide area network (WAN)) and read by the CPU 1020 via the network interface 1070.

The above-described embodiments and variations thereof are included in the invention described in claims and the equivalent scope thereof as well as included in the technology disclosed by the present application.

[Explanation of Reference]

| | |
|---|---|
| 10, 10A | LEARNING DEVICE |
| 11 | COMMUNICATION PROCESSING UNIT |
| 12 | CONTROL UNIT |
| 12a | ACQUISITION UNIT |
| 12b | FIRST CALCULATION UNIT |
| 12c | UPDATE UNIT |
| 12d | SECOND CALCULATION UNIT |
| 12e | UPDATE ENDING UNIT |
| 12f | EXTRACTION UNIT |
| 12g | PREDICTION UNIT |
| 12h | VISUALIZATION UNIT |
| 13 | STORAGE UNIT |
| 13a | DATA STORAGE UNIT |
| 13b | LEARNED MODEL STORAGE UNIT |

**Claims**

1. A learning device comprising:

an acquisition unit configured to acquire a plurality of pieces of data;
a first calculation unit configured to input the plurality of pieces of data acquired by the acquisition unit to a model as input data, and when obtaining output data output from the model, calculate a loss of the model based on the output data and a correct answer data;
an update unit configured to repeat update processing of updating weight of the model in accordance with a loss each time the first calculation unit calculates the loss;
a second calculation unit configured to calculate a value contributing to interpretability of the model; and
an update ending unit configured to end the update processing when the loss calculated by the first calculation unit and the value calculated by the second calculation unit satisfy a predetermined condition.

2. The learning device according to claim 1, wherein the second calculation unit is configured to calculate an attribution, which is a contribution level of each element of input data to output data, based on the input data and the output data.

3. The learning device according to claim 1, wherein, when a loss calculated by the first calculation unit is equal to or less than a predetermined threshold and a value calculated by the second calculation unit is equal to or less than a predetermined threshold, the update ending unit is configured to end the update processing.

4. The learning device according to claim 1, wherein, when a loss calculated by the first calculation unit is consecutively larger than a loss calculated last time at a predetermined number of times and a value calculated by the second calculation unit is consecutively larger than a value calculated last time at a predetermined number of times, the update ending unit is configured to end the update processing.

5. The learning device according to claim 1, further including an extraction unit configured to input input data to a learned model for which the update unit had repeated update processing until the update ending unit ended the update processing and, when obtaining output data output from the learned model, extract a value contributing to interpretability of the model.

6. A learning method executed by a learning device, comprising:

an acquisition process of acquiring a plurality of pieces of data;
a first calculation process of inputting the plurality of pieces of data acquired at the acquisition process to a model as input data, and when output data output from the model is obtained, calculating a loss of the model based on the output data and a correct answer data;
an update process of repeating update processing of updating weight of the model in accordance with a loss each time the loss is calculated at the first calculation process;
a second calculation process of calculating a value contributing to interpretability of the model; and
an update ending process of ending the update processing when the loss calculated at the first calculation process and the value calculated at the second calculation process satisfy a predetermined condition.

7. A learning program that causes a computer to execute:

an acquisition step of acquiring a plurality of pieces of data;
a first calculation step of inputting the plurality of pieces of data acquired at the acquisition step to a model as input data, and when output data output from the model is obtained, calculating a loss of the model based on the output data and a correct answer data;
an update step of repeating update processing of updating weight of the model in accordance with a loss each time the loss is calculated at the first calculation step;
a second calculation step of calculating a value contributing to interpretability of the model; and
an update ending step of ending the update processing when the loss calculated at the first calculation step and the value calculated at the second calculation step satisfy a predetermined condition.

# FIG.1

10

LEARNING DEVICE

## CONTROL UNIT $\quad$ 12

## STORAGE UNIT $\quad$ 13

### COMMUNICA-TION PROCESSING UNIT $\quad$ 11

#### ACQUISITION UNIT $\quad$ 12a

#### FIRST CALCU-LATION UNIT $\quad$ 12b

#### UPDATE UNIT $\quad$ 12c

#### SECOND CALCU-LATION UNIT $\quad$ 12d

#### UPDATE ENDING UNIT $\quad$ 12e

#### DATA STORAGE UNIT $\quad$ 13a

#### LEARNED MODEL STORAGE UNIT $\quad$ 13b

# FIG.2

FIRST LEARNING
REPEAT

Phase 1: WEIGHT UPDATING

LEARNING DATA → MODEL

CALCULATE LOSS → CORRECT ANSWER LABEL

UPDATE WEIGHT IN ACCORDANCE WITH MAGNITUDE OF LOSS

Phase 2: ATTRIBUTION CALCULATION

VERIFICA-TION DATA → MODEL

CALCULATE LOSS → CORRECT ANSWER LABEL

CALCULATE ATTRIBUTION

DETERMINE WHETHER TO END LEARNING BASED ON CALCULATED VALUES OF LOSS AND ATTRIBUTION

# FIG.3

```
                    ┌─────────────┐
                    │    START    │
                    └──────┬──────┘
                           │
         ┌─────────────────▼─────────────────┐
    ┌───►│          ACQUIRE DATA             │───S101
    │    └─────────────────┬─────────────────┘
    │                      ▼
    │    ┌─────────────────────────────────┐
    │    │        INPUT DATA TO MODEL      │───S102
    │    └─────────────────┬───────────────┘
    │                      ▼
    │    ┌─────────────────────────────────┐
    │    │  CALCULATE LOSS OF MODEL BASED ON│
    │    │ OUTPUT DATA AND CORRECT ANSWER   │───S103
    │    │             DATA                 │
    │    └─────────────────┬───────────────┘
    │                      ▼
    │    ┌─────────────────────────────────┐
    │    │    UPDATE WEIGHT OF MODEL IN     │───S104
    │    │    ACCORDANCE WITH LOSS          │
    │    └─────────────────┬───────────────┘
    │                      ▼
    │    ┌─────────────────────────────────┐
    │    │    CALCULATE ATTRIBUTION BY      │───S105
    │    │ USING INPUT DATA AND OUTPUT DATA │
    │    └─────────────────┬───────────────┘
    │                      ▼
    │                  S106
    │            ╱─────────────╲
    │           ╱  DO LOSS AND  ╲   YES
    │          ╱ ATTRIBUTION SATISFY╲────────┐
    │          ╲  PREDETERMINED   ╱          │
    │           ╲  CONDITION?    ╱           │
    │            ╲─────┬────────╱            │
    │              NO  │                     │
    └──────────────────┘                     │
                                             ▼
                    ┌─────────────────────────────────┐
                    │       STORE LEARNED MODEL        │───S107
                    └─────────────────┬───────────────┘
                                      ▼
                              ┌─────────────┐
                              │     END     │
                              └─────────────┘
```

# FIG.4

10A

LEARNING DEVICE

### CONTROL UNIT 12

**ACQUISITION UNIT** 12a

**FIRST CALCU-LATION UNIT** 12b

**UPDATE UNIT** 12c

**SECOND CALCU-LATION UNIT** 12d

**UPDATE ENDING UNIT** 12e

**EXTRACTION UNIT** 12f

**PREDICTION UNIT** 12g

**VISUALIZATION UNIT** 12h

### COMMUNICA-TION PROCESSING UNIT 11

### STORAGE UNIT 13

**DATA STORAGE UNIT** 13a

**LEARNED MODEL STORAGE UNIT** 13b

# FIG.5

SENSOR
AND LIKE

DEVICE, REACTION
FURNACE, AND LIKE
IN PLANT

DATA COLLECTION

A

B

C

D

E

TIME

t

ABNORMALITY LEVEL

t

t+N

CALCULATE
ABNORMALITY LEVEL

PREDICTION

MODEL LEARNING

EXTRACT ATTRIBUTION

ATTRIBUTION
VISUALIZATION

IMPORTANCE OF
PROCESS DATA TO
PREDICTION

A

B

C

D

E

TIME

t

# FIG.6

CAR or AIRPLANE

DATA COLLECTION

PREDICTION

MODEL LEARNING

EXTRACT ATTRIBUTION

ATTRIBUTION VISUALIZATION

# FIG.7

```
                    ┌──────────────┐
                    │    START     │
                    └──────┬───────┘
                           │
      ┌────────────────────▼────────────────────┐
      │         ◇                      ◇  S201
   NO │       HAS DATA BEEN
      │         ACQUIRED?
      └──────────────┬──────────────┘
                     │ YES
                     ▼
      ┌──────────────────────────────┐
      │  INPUT DATA TO LEARNED MODEL  │  S202
      └──────────────┬───────────────┘
                     │
                     ▼
      ┌──────────────────────────────┐
      │   CALCULATE ATTRIBUTION BY    │
      │  USING INPUT DATA AND OUTPUT  │  S203
      │             DATA              │
      └──────────────┬───────────────┘
                     │
                     ▼
      ┌──────────────────────────────┐
      │   DISPLAY GRAPH VISUALIZING   │  S204
      │         ATTRIBUTION           │
      └──────────────┬───────────────┘
                     │
                     ▼
             ┌──────────────┐
             │     END      │
             └──────────────┘
```

# FIG.8

EP 4 080 420 A1

<div align="center">

**INTERNATIONAL SEARCH REPORT**

</div>

| International application No. |
| --- |
| PCT/JP2020/047396 |

| A. CLASSIFICATION OF SUBJECT MATTER |
| --- |
| G06N 20/00(2019.01)i |
| FI: G06N20/00 130 |
| According to International Patent Classification (IPC) or to both national classification and IPC |

| B. FIELDS SEARCHED |
| --- |

| Minimum documentation searched (classification system followed by classification symbols) |
| --- |
| G06N20/00 |

| Documentation searched other than minimum documentation to the extent that such documents are included in the fields searched |
| --- |
| Published examined utility model applications of Japan    1922–1996<br>Published unexamined utility model applications of Japan    1971–2021<br>Registered utility model specifications of Japan    1996–2021<br>Published registered utility model applications of Japan    1994–2021 |

| Electronic data base consulted during the international search (name of data base and, where practicable, search terms used) |
| --- |
| |

**C. DOCUMENTS CONSIDERED TO BE RELEVANT**

| Category* | Citation of document, with indication, where appropriate, of the relevant passages | Relevant to claim No. |
| --- | --- | --- |
| A | JP 07-064945 A (FUJITSU LTD.) 10 March 1995 (1995-03-10) abstract, fig. 1 | 1–7 |
| A | 切通恵介、泉谷知範、ニューラルネットに基づく時間変化するアトリビューション抽出手法 Time-Smoothgrad の提案，2019 年度人工知能学会全国大会（第 33 回）[online], 07 June 2019, pp. 1-4 (4Q3-J-13-04) entire text, all drawings, (KIRITOSHI, Keisuke, IZUMITANI, Tomonori, "Time-Smoothgrad: A Method Extracting Time-Varying Attribution For Neural Networks", The 33rd Annual Conference of the Japanese Society for Artificial Intelligence, 2019[online]) | 1–7 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 March 2021 (10.03.2021) | 23 March 2021 (23.03.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

| International application No. |
|---|
| PCT/JP2020/047396 |

| Patent Documents referred in the Report | Publication Date | Patent Family | Publication Date |
|---|---|---|---|
| JP 07-064945 A | 10 Mar. 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SMILKOV DANIEL et al.** Smoothgrad: removing noise by adding noise. *arXiv preprint 1706.03825,* 2017
- **SIMONYAN KAREN ; ANDREA VEDALDI ; ANDREW ZISSERMAN.** Deep inside convolutional networks: Visualising image classification models and saliency maps. *arXiv: 1312.6034,* 2014
- **BINDER ALEXANDER et al.** Layer-wise relevance propagation for deep neural network architectures. *Information Science and Applications (ICISA) 2016. ringer, Singapore,* 2016, 913-922
- Why should i trust you?: Explaining the predictions of any classifier. **RIBEIRO MARCO TULIO ; SAMEER SINGH ; CARLOS GUESTRIN.** Proceedings of the 22nd ACM SIGKDD international conference on knowledge discovery and data mining. ACM, 2016
- **STRUMBELJ ERIK ; IGOR KONONENKO.** Explaining prediction models and individual predictions with feature contributions. *Knowledge and information systems,* 2013, vol. 41 (3), 647-665